(19)

Europäisches
Patentamt
European
Patent Office
Office européen
des brevets

(11) **EP 4 456 197 A1**

(12) **EUROPEAN PATENT APPLICATION**
published in accordance with Art. 153(4) EPC

(43) Date of publication:
**30.10.2024  Bulletin 2024/44**

(21) Application number: **22911777.5**

(22) Date of filing: **15.12.2022**

(51) International Patent Classification (IPC):
*H01M 4/525* (2010.01)          *H01M 4/505* (2010.01)
*H01M 4/36* (2006.01)           *H01M 4/62* (2006.01)
*H01M 4/131* (2010.01)          *H01M 10/0562* (2010.01)
*H01M 10/052* (2010.01)         *H01M 4/02* (2006.01)

(52) Cooperative Patent Classification (CPC):
H01M 4/02; H01M 4/131; H01M 4/36; H01M 4/505;
H01M 4/525; H01M 4/62; H01M 10/052;
H01M 10/0562; Y02E 60/10

(86) International application number:
**PCT/KR2022/020495**

(87) International publication number:
**WO 2023/121144 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.12.2021  KR 20210183835**

(71) Applicants:
• **POSCO Holdings Inc.**
 **Seoul 06194 (KR)**
• **RESEARCH INSTITUTE OF INDUSTRIAL
 SCIENCE &
 TECHNOLOGY
 Pohang-si, Gyeongsangbuk-do 37673 (KR)**

(72) Inventors:
• **EUN, Tai Hee**
 **Pohang-si, Gyeongsangbuk-do 37671 (KR)**
• **MOON, Ji Woong**
 **Pohang-si, Gyeongsangbuk-do 37685 (KR)**
• **PARK, Yooncheol**
 **Busan 48309 (KR)**
• **YUN, Jeongsik**
 **Busan 48309 (KR)**
• **NAM, Sang Cheol**
 **Seoul 02587 (KR)**

(74) Representative: **Pfenning, Meinig & Partner mbB
Patent- und Rechtsanwälte
Theresienhöhe 11a
80339 München (DE)**

(54) **POSITIVE ELECTRODE ACTIVE MATERIAL FOR ALL-SOLID BATTERY AND PREPARATION METHOD THEREFOR, POSITIVE ELECTRODE AND ALL-SOLID BATTERY**

(57)     It is related to a positive active material for all-solid battery, a method of preparing the same, a positive electrode including the same, and an all-solid secondary battery including the same, comprising: a secondary particle formed by agglomeration of a primary particle of the positive active material with a layered crystal structure, wherein, the secondary particle has a plurality of internal pores, and the plurality of internal pores accounts for 5 to 15 volume% of the total volume of the secondary particle.

【FIG. 1】

EP 4 456 197 A1

**Description**

**FIELD OF THE INVENTION**

It relates to a positive active material for all-solid battery and their manufacturing methods, positive electrodes, and all-solid battery.

**DESCRIPTION OF THE RELATED ART**

Recently, there is a growing demand for increased driving range and improved safety of electric vehicles. Accordingly, the development of lithium secondary batteries with high weight and volume energy density while ensuring safety is important. The energy capacity applied to particularly electric vehicles is in the tens of kwh level, so there is a high possibility of a large-scale sinter or explosion if the battery is damaged. Therefore, it is urgent to supplement the prior lithium secondary battery. Accordingly, all solid batteries that replace liquid electrolytes with solid electrolytes in lithium secondary batteries are being researched.

**SUMMARY OF THE INVENTION**

One embodiment provides a positive active material for an all-solid battery that can prevent performance degradation by increasing structural stability.
Another embodiment provides a manufacturing method of positive active material for the all-solid battery.
Another embodiment provides a positive electrode containing positive active material for the all-solid battery.
Another embodiment provides an all-solid battery including the positive electrode.
According to one embodiment, it is provided a positive active material for all-solid battery, comprising:
a secondary particle formed by agglomeration of a primary particle of the positive active material with a layered crystal structure, wherein, the secondary particle has a plurality of internal pores, and the plurality of internal pores accounts for 5 to 15 volume% of the total volume of the secondary particle.
An average particle diameter D50 of the secondary particle can be about $3\mu$m to $12\mu$m.
The positive active material may include nickel (Ni) and cobalt (Co).
The positive active material may include layered nickel-cobalt-manganese-based oxide or layered nickel-cobalt-aluminum-based oxide.
The positive active material for the all-solid battery may further include a coating layer containing LiZrOs or LiNbOs, which is positioned on the surface of the secondary particle.
According to another embodiment, it is provided a method of preparing a positive active material for all-solid battery, comprising:
forming a positive active material precursor by co-precipitating a solution containing raw materials for forming a positive active material of the layer-type crystal structure at a pH of less than 11.0, preparing a mixture by mixing the positive active material precursor with a lithium raw material, and forming a secondary particle formed by agglomeration of a primary particle of a positive active material by sintering the mixture.
Raw materials for forming the positive active material of the layered crystal structure may include nickel (Ni) raw material and cobalt (Co) raw material, and further include manganese (Mn) raw material or aluminum (Al) raw material.
The step of forming the positive active material precursor may include adjusting the pH to less than 11.0 by adding alkali metal oxide, alkaline-earth metal oxide, or a combination thereof to the solution.
The step of forming the positive active material precursor may not include reacting at pH 11.0 or higher.
The sintering step may include raising and lowering the temperature at a rate of less than about 5°C per minute.
The secondary particle may have a plurality of internal pores, and the plurality of internal pores may account for approximately 5 to 15 volume% of the total volume of the secondary particle.
According to another embodiment, a positive electrode including a positive active material for an all-solid battery is provided.
The positive electrode may further contain sulfide solid electrolyte.
According to another embodiment, an all-solid battery including the positive electrode is provided.
The all-solid battery may further include a negative electrode and a sulfide solid electrolyte.
By increasing structural stability, performance degradation of all-solid battery can be effectively prevented.

**BRIEF DESCRIPTION OF THE DRAWINGS**

FIG. 1 to 3 are SEM pictures of positive active material according to Preparation Example 1,

FIG. 4 to 6 are SEM pictures of positive active material according to Comparison Preparation Example 1,

FIG. 7 and 8 are SEM photos showing the cross-section of the positive electrode after 100 cycles of charging and discharging the all-solid battery according to exemplary embodiment 1,

FIG. 9 and 10 are SEM pictures showing the cross-section of the positive electrode after 100 cycles of charging and discharging the all-solid battery according to Comparative Example 1.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing/having" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art d°Cument and the currently disclosed contents and are not interpreted as ideal or formal meaning unless defined.

Hereinafter, a positive active material for an all solid battery according to an embodiment will be described.

A positive active material for an all-solid battery according to one embodiment includes secondary particles formed by agglomeration of primary particles of a positive active material of a layered crystal structure.

The positive active material of the layered crystal structure may include lithium transition metal oxides, including nickel (Ni) and cobalt (Co), and may be expressed as the following formula 1.

[Chemical Formula 1]     $Li_aNi_xCo_yM1_zM2_kO_2$

In formula 1 above,

M1 may be Mn, Al or a combination thereof,

M2 may be Zr, W, Mg, Ba, Ca, Ti, Ta, Nb, Mo, Si, V or a combination thereof,

it may be $0.9 \leq a \leq 1.5$, $0.5 < x \leq 0.95$, $0 < y \leq 0.4$, $0 < z \leq 0.4$, and

$$0 \leq k \leq 0.02.$$

For example, the positive active material of the layer-type crystal structure may include layer-type nickel-cobalt-manganese-based oxide or layer-type nickel-cobalt-aluminum-based oxide.

The positive active material for the all-solid battery includes secondary particles formed by agglomeration of primary particles with a particle diameter of tens to hundreds of nanometers, and the secondary particles may have a controlled shape and internal pores.

As described above, the secondary particles are formed by agglomeration of primary particles of the positive active material of the layer-like crystal structure. During charge and discharge, non-uniform volume changes may occur in a plurality of directions due to electrochemical mechanical behavior according to the characteristic phase transition of the layered crystal structure. If such non-uniform volume changes persist, internal stress accumulates in the core of the secondary particle, resulting in more extreme changes in the lattice structure. As a result, internal stress becomes increasingly severe, and a plurality of microcracks may occur simultaneously.

The positive active material for an all-solid battery according to this embodiment can flexibly respond to such uneven volume changes and resulting internal stress by having a controlled shape and porosity. It can effectively prevent microcracks and the resulting degradation of battery performance.

The secondary particle can have a plurality of internal pores. The internal pore is a pore that can be identified inside the secondary particle when observing the cross-section of the secondary particle, and may be an empty space isolated from the surface of the secondary particle. The size of the plurality of internal pores can vary.

The plurality of internal pores may occupy approximately 5 to 15 volume% of the total volume of the secondary particles, within the range approximately 7 to 13 volume% or approximately 8 to 12 volume%. The secondary particles have the above range of pores and can effectively respond to internal stress without reducing the capacity of the positive active material.

By these internal pores, the shape of the secondary particle can be controlled, for example it can be a spherical shape, but is not limited thereto. The average particle diameter D50 of the secondary particle may be about $3\mu m$ to $12\mu m$, and within the range may be about $3\mu m$ to $10\mu m$ or about $3\mu m$ to $8\mu m$.

Such controlled shape and porosity can be achieved by controlling process conditions during the manufacturing process, and can be implemented by pH control during co-precipitation of raw materials, for example. This will be described later.

The positive active material for an all-solid battery according to this embodiment may further include a coating layer positioned on the surface of the secondary particle. The coating layer may include lithium metal oxide, for example $LiZrOs$ or $LiNbOs$. The coating layer can effectively suppress the reaction with all-solid electrolyte at the interface with all-solid electrolyte, which will be described later.

Hereinafter, an example of a manufacturing method of the above-described positive active material for an all-solid battery will be described.

According to another embodiment, it is provided a method of preparing a positive active material for all-solid battery, comprising:

forming a positive active material precursor by co-precipitating a solution containing raw materials for forming a positive active material of the layer-type crystal structure at a pH of less than 11.0, preparing a mixture by mixing the positive active material precursor with a lithium raw material, and forming a secondary particle formed by agglomeration of a primary particle of a positive active material by sintering the mixture.

First, a positive active material precursor is formed from raw materials to form a positive active material of a layered crystal structure.

Raw materials for forming a positive active material with a layered crystal structure may include nickel (Ni) raw material and cobalt (Co) raw material, and additionally manganese (Mn) raw material or aluminum (Al) raw material. For example, if the positive active material of the layer-type crystal structure is a layer-type nickel-cobalt-manganese-based oxide, the raw materials may include nickel (Ni) raw material, cobalt (Co) raw material, and manganese (Mn) raw material. For example, if the positive active material of the layered crystal structure is a layered nickel-cobalt-aluminum oxide, the raw materials may include nickel (Ni) raw material, cobalt (Co) raw material, and aluminum (Al) raw material. In addition, raw materials may further include zirconium (Zr) raw material, tungsten (W) raw material, magnesium (Mg) raw material, barium (Ba) raw material, calcium (Ca) raw material, titanium (Ti) raw material, tantalum (Ta) raw material, niobium (Nb) raw material, molybdenum (Mo) raw material, silicon (Si) raw material and/or vanadium (V) raw material.

For example, the nickel (Ni) raw material may be nickel acetic acid salt, nickel nitrate, nickel sulfate, nickel halide, nickel hydroxide, hydrate or combination thereof, but is not limited thereto.

For example, cobalt (Co) raw material may be cobalt acetic acid salt, cobalt nitrate, cobalt sulfate, cobalt halide, cobalt hydroxide, hydrate or combination thereof, but is not limited thereto.

For example, the manganese (Mn) raw material may be manganese acetic acid salt, manganese nitrate, manganese sulfate, manganese halide, manganese hydroxide, hydrate or combination thereof, but is not limited thereto.

For example, the aluminum (Al) raw material may be aluminum acetic acid salt, aluminum nitrate, aluminum sulfate, aluminum halide, aluminum hydroxide, hydrate or combination thereof, but is not limited thereto.

A solution containing these raw materials may be an aqueous solution, for example, and each raw material may be mixed in a predetermined ratio considering the composition of the final positive active material. The solution containing the raw materials may further include an organic solvent that can be mixed with water, and the organic solvent may be alcohol such as methanol, ethanol and/or propanol.

The solution containing the raw materials can be co-precipitated within the reactor, and at this time, the pH within the reactor can be adjusted to less than 11.0 using a complexing agent and a pH controlling agent before adding the solution containing the raw materials to the reactor. The pH of the reactor may be, for example, 8.0 or more but less than 11.0, 8.5 or more but less than 11.0, or 9.0 or more but less than 11.0, but is not limited thereto. The complexing agent may be an ammonium-containing ion such as for example $NH_3$, $NH_4CO_3$, $NH_4NO_3$, $NH_4OH$, $CH_3COONH_4$ or combination thereof, and the pH controlling agent may be hydroxide of alkali metal, alkaline-earth metal hydroxide or a combination thereof, such as for example NaOH, KOH, $Ca(OH)_2$ or combination thereof.

By placing a solution containing the raw materials in a reactor with a controlled pH like this and performing co-precipitation, nuclei of the positive active material precursor are generated and grown, thereby obtaining a positive active material precursor of a predetermined size. At this time, the pH in the reactor can be consistently controlled to less than 11.0, and the step of reacting above pH 11.0 may not be included.

Next, the positive active material precursor obtained above is mixed with a lithium raw material.

The lithium raw material is not particularly limited as long as it is a material that can provide lithium, and may be, for example, LiOH, $Li_2CO_3$, $LiNO_3$, $CH_3COOLi$, or a hydrate or combination thereof.

The positive active material precursor and lithium raw material can be mixed at a mole ratio of 1:9 to 9:1, for example, within the range of about 2:8 to 8:2, 3:7 to 7:3, 4:6 to 6:4 or 5:5.

Next, the mixture of the positive active material precursor and lithium raw material obtained above is sintered.

Sintering can be performed at a temperature of about 600°C or higher, for example about 650°C or higher, about 700°C or higher, or about 720°C or higher, within the range for example about 600 to 1,000°. C, about 650 to 1,000°C, about 700 to 1,000°C or about 720 to 1,000°C. The sintering time can be appropriately selected within the range for example 3 hours to 30 hours. When sintering, the temperature increase speed and temperature decrease speed can be controlled. For example, the temperature increase and decrease speeds can each be controlled to less than 5°C per minute, and for example, they can each be controlled to less than 4°C per minute or less than 3°C per minute.

A composite material of a positive active material precursor and a lithium raw material can be obtained by sintering, and the composite material of the positive active material precursor and a lithium raw material may be secondary particles formed by agglomeration of primary particles of the positive active material.

As described above, by forming from a positive active material precursor formed in a pH-controlled atmosphere, secondary particle with controlled shape and porosity can be formed in the sintering step. The obtained secondary particle may have a plurality of internal pores inside, and the internal pores may account for approximately 5 to 15 volume% of the total volume of the secondary particles.

The positive active material for the above-mentioned all solid battery may be included in the positive electrode of the all solid battery. The positive electrode may be a composite of the solid electrolyte of an all solid battery, and thus the positive electrode may include a solid electrolyte component, for example a sulfide solid electrolyte.

An all solid battery according to one embodiment includes a positive electrode, a negative electrode, and a solid electrolyte interposed between the positive electrode and the negative electrode. Selectively, a positive electrode and a solid electrolyte may be combined to form a positive electrode composite.

A positive electrode (including a positive electrode composite) includes a current collector and a positive active material layer formed on the current collector, and the positive active material layer includes a positive active material for an all solid battery, a conductive material, and a selective binder. In the case of a positive electrode composite, the positive active material layer may further include a solid electrolyte.

The positive active material for all-solid battery is the same as described above. The positive active material for all solid battery may be included in excess of about 50wt% relative to the total content of the positive active material layer, within the range of about 55 to 99wt%, about 60 to 99wt%, about 65 to 99wt%, about 70 to 99wt%, about 75 to 99wt%, about 55 to 95wt%, about 60 to 95wt%, about 65 to 95wt%, about 70 to 95wt% or about 75 to 95wt%.

The conductive material may be a carbon material, for example graphite, carbon black, carbon fluoride, conductive fiber, conductive metal oxide or a combination thereof, but is not limited thereto. The conductive material may be included in an amount of 20wt% or less relative to the total content of the positive active material layer, for example 0.1 to 20wt%, 1 to 15wt% or 1 to 10wt%.

The binder can improve the binding power of the current collector and positive active material, and the binding power of positive active material and solid electrolyte, and be for example polyvinylidene fluoride polyvinylalcohol, hydroxypropylcellulose, styrene butadiene rubber or combination thereof, but is not limited thereto. The binder may be included in an amount of 30wt% or less relative to the total content of the positive active material layer, for example about 0.1 to 30wt%, about 1 to 25wt% or 1 to 15wt%.

A solid electrolyte may include, for example, sulfide solid electrolyte. The sulfide solid electrolyte contains lithium (Li) and sulfur (S) as main components and may additionally contain phosphorus (P) and/or halogen (F, Cl, Br, I), for example $Li_3PS_4$, $Li_7P_3S_{11}$, $Li_6PS_5F$, $Li_6PS_5Br$, $Li_6PS_5Cl$, $Li_7P_2S_8I$ or combination thereof, but is not limited thereto. The solid electrolyte may be included in less than about 50 wt% relative to the total content of the positive active material layer, and may be included in the range of about 5 to 40 wt%, about 10 to 30 wt%, or about 15 to 30 wt%.

The negative electrode includes a current collector and a negative active material layer formed on the current collector. The negative active material layer may include a compound capable of reversible intercalation and deintercalation of lithium and may include, for example, a carbon material such as graphite, a metal compound, metal oxide or a combination thereof.

Hereinafter, the above-described implementation example will be described in more detail through an exemplary embodiment. However, the exemplary embodiment below is for illustrative purposes only and does not limit the scope.

**Manufacturing of a positive active material for all-solid battery**

**Preparation Example 1**

Complexing agent $NH_3$ and pH controlling agent (NaOH) were added to an aqueous solution containing 83 mol% of $NiSO_4$, 12 mol% of $CoSO_4$, and 5 mol% of $MnSO_4$, and co-precipitation was performed in an atmosphere of pH less than 11.0 (pH 9.0 or more but less than 11.0). $Ni_{0.8}Co_{0.12}Mn_{0.08}(OH)_2$ positive active material precursor was formed. Next, a mixture was prepared by mixing the positive active material precursor and lithium raw material ($LiOH \cdot H_2O$) at a mole ratio of 1 :1.05. Then, 30g of the mixture was put into a tube with a diameter of 8cm, the temperature was raised at a speed of 2.5°C/min, maintained at a maximum sintering temperature of 745°C for 10 hours, and then the temperature was lowered at a speed of 2.5°C/min. During the sintering, pure $O_2$ was supplied and the $O_2$ concentration was maintained above 99% to obtain $LiNi_{0.8}Co_{0.12}Mn_{0.08}O_2$ positive active material. The average particle size D50 of the secondary particle diameter of the positive active material was about 5.3 $\mu$m.

**Comparative preparation Example 1**

A positive active material was obtained using the same method as the Preparation Example, except that the step of forming the positive active material precursor was performed at pH 11.0-11.5 without pH control.

**Evaluation I**

The shape of the positive active material obtained from the Preparation Example and Comparative preparation example was evaluated.
The shape of the positive active material was evaluated using a scanning electron microscope (SEM).

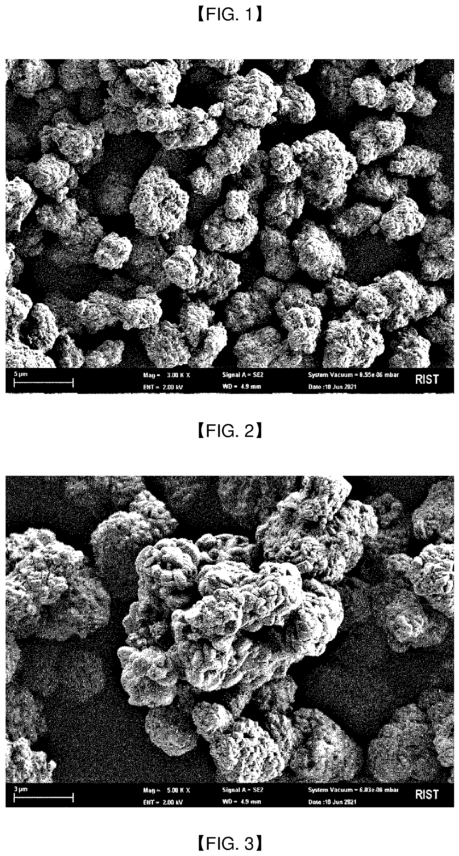

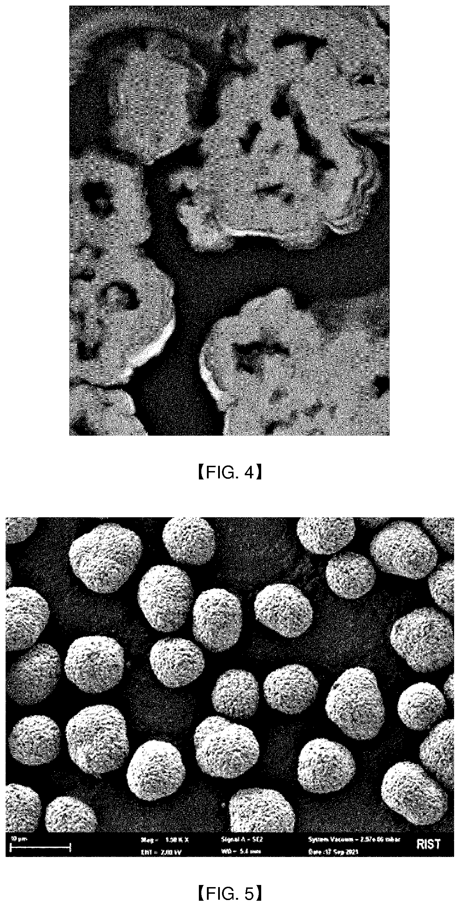

FIG. 1 to 3 are SEM images (magnification 3000x, 5000x, cross-section image) of positive active material according to Preparation Example 1. FIG. 4 to 6 are SEM images (1000x, 3000x, cross-section image (20000x)) of the positive active material according to Comparative Preparation Example 1.
Referring to FIG. 1 to 6, it can be seen that the positive active material according to Preparation Example has a different shape from the positive active material according to Comparative Preparation Example 1, and a relatively large plurality of pores is observed inside.

**Evaluation II**

The porosity of the positive active material obtained from the Preparation Example and Comparative preparation Example was evaluated.
Porosity was measured and evaluated by converting the cross-section image (X-section image) into 3D.
The results are as shown in Table 1.

(Table 1)

|  | Porosity (%) |
| --- | --- |
| Preparation Example 1 | 13% |
| Comparative Preparation Example 1 | < 2% |

Referring to Table 1, it can be seen that the positive active material according to Preparation Example 1 has a higher porosity compared to the positive active material according to Comparison Preparation Example 1.

**Manufacturing of an all-solid battery**

**Exemplary embodiment 1**

A paste was prepared by mixing 75 wt% of positive active material according to Preparation Example 1, 22 wt% of argyrodite solid electrolyte, and 3 wt% of C65 (conductive material) with a solvent containing a small amount of binder dissolved. A positive electrode plate was manufactured by applying the paste on the current collector and drying it. Argyrodite solid electrolyte, which functions as a separator, was quantitatively charged to the all-solid battery evaluation jig. After pressing with a force of 300 MPa or more so that the thickness was 100 $\mu$m, the positive electrode plate prepared above was placed on one side and secondary pressure was applied to form a positive electrode. Then, Li-In alloy was added to the other side of the solid electrolyte and pressurized to produce an all-solid battery.

**Comparative Example 1**

An all-solid battery was manufactured using the same method as exemplary embodiment 1, except that the positive active material according to Comparative Preparation Example 1 was used instead of the positive active material according to Preparation Example 1.

**Evaluation III**

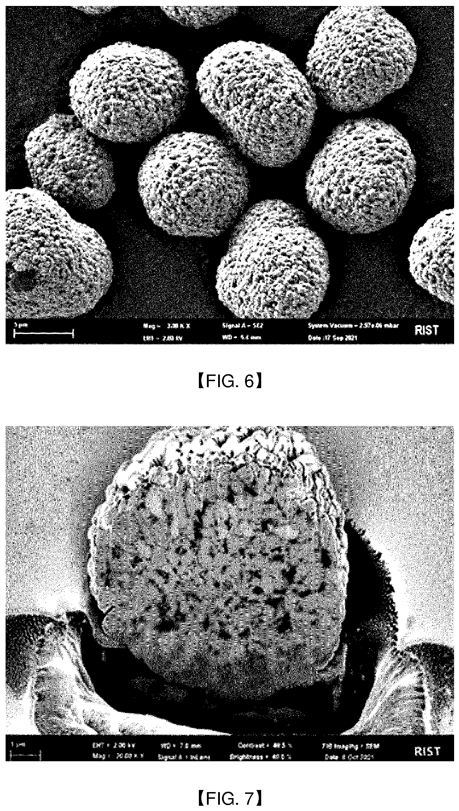

The all-solid battery according to Exemplary Embodiment 1 and Comparative Example 1 was installed in the charge and discharge machine, and the charge and discharge characteristics were evaluated at 30 °C.
The initial cycle proceeded with 0.1C charge and 0.1C discharge (1C=185mAh/g), and the cycle after the initial cycle proceeded with 0.5C charge and 0.5C discharge. The charge cut-off voltage was 3.7V and the discharge cut-off voltage was 1.9V.
The results are in Table 2 and FIGs. 7 to 10.

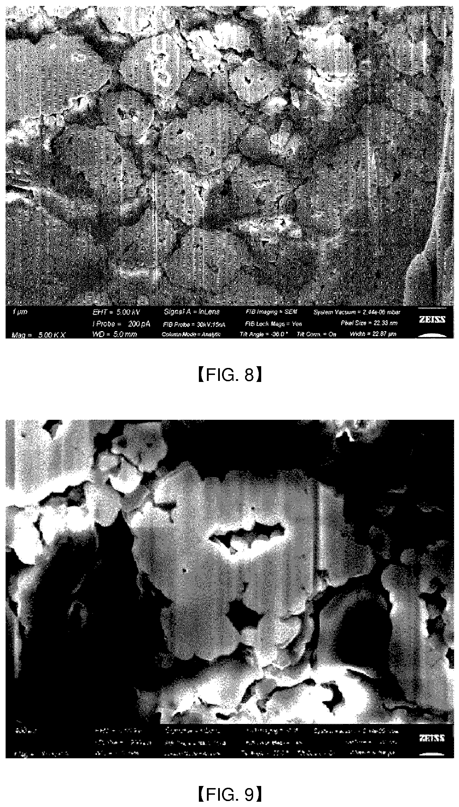

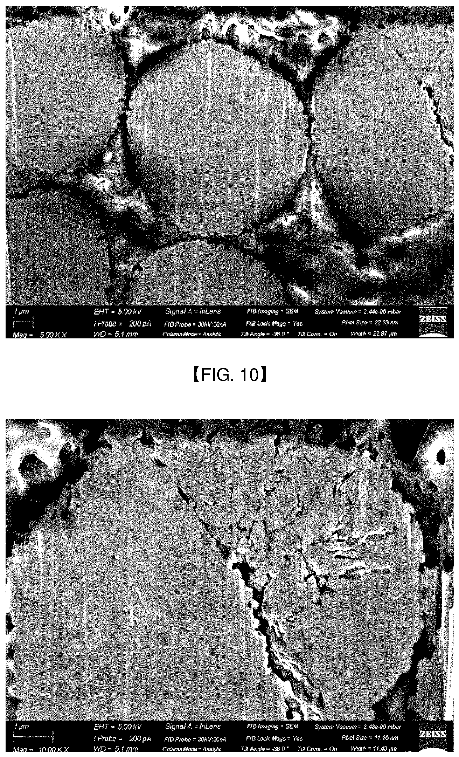

FIG. 7 and 8 are SEM pictures (5000x, 20000x) showing the cross-section of the positive electrode after 100 cycles of charging and discharging the all-solid battery according to exemplary embodiment 1. FIG. 9 and 10 are SEM pictures (5000x, 10000x) showing the cross-section of the positive electrode after 100 cycles of charging and discharging the all-solid battery according to Comparative Example 1.
Referring to FIG. 7 to 10, cracks and/or peeling were not found in the all-solid battery according to exemplary embodiment 1, whereas a plurality of cracks was confirmed in the all-solid battery according to Comparative Example 1. From this, it can be expected that the all-solid battery according to Exemplary Embodiment 1 has less physical damage during charging and discharging compared to the all-solid battery according to Comparative Example 1, thereby reducing performance degradation.

(Table 2)

|  | initial capacity (mAh/g) | Retention after 100 cycles (%) |
|---|---|---|
| exemplary embodiment 1 | 0.1C 196.2 mAh/g | 81.3% |
|  | 0.5C 166.3 mAh/g |  |
| Comparative Example 1 | 0.1C 203.2 mAh/g | 59.8% |
|  | 0.5C 179.9 mAh/g |  |

Referring to Table 2, it can be seen that the all-solid battery according to the exemplary embodiment has higher capacity retention after 100 cycles than the all-solid battery according to the Comparative Example. From this, it can be seen that the all-solid battery according to the exemplary embodiment has less performance degradation during charge and discharge compared to the all-solid battery according to the comparative example.
Although exemplary embodiments have been described in detail above, the scope is not limited to this, and various modifications and improvements of a person of an ordinary skill in the art using the basic concept defined in the following claim range also fall within the scope.

**Claims**

1.   A positive active material for all-solid battery, comprising:

     a secondary particle formed by agglomeration of a primary particle of the positive active material with a layered crystal structure,
     wherein, the secondary particle has a plurality of internal pores,
     the plurality of internal pores accounts for 5 to 15 volume% of the total volume of the secondary particle.

2.   The positive active material of claim 1, wherein:
     an average particle diameter D50 of the secondary particle is 3µm to 12µm.

3.   The positive active material of claim 1, wherein:

the positive active material comprises nickel (Ni) and cobalt (Co).

4. The positive active material of claim 3, wherein:
the positive active material comprises layered nickel-cobalt-manganese-based oxide or layered nickel-cobalt-aluminum-based oxide.

5. The positive active material of claim 1, further comprises:
a coating layer containing LiZrOs or LiNbOs, and positioned on the surface of the secondary particle.

6. A method of preparing a positive active material for all-solid battery, comprising:

forming a positive active material precursor by co-precipitating a solution containing raw materials for forming a positive active material of the layer-type crystal structure at a pH of less than 11.0,
preparing a mixture by mixing the positive active material precursor with a lithium raw material, and
forming a secondary particle formed by agglomeration of a primary particle of a positive active material by sintering the mixture.

7. The method of claim 6, wherein:
raw materials for forming the positive active material of the layered crystal structure include nickel (Ni) raw material and cobalt (Co) raw material, and further include manganese (Mn) raw material or aluminum (Al) raw material.

8. The method of claim 6, wherein:
the step of forming the positive active material precursor includes adjusting the pH to less than 11.0 by adding alkali metal oxide, alkaline-earth metal oxide, or a combination thereof to the solution.

9. The method of claim 6, wherein:
the step of forming the positive active material precursor does not include reacting at pH 11.0 or higher.

10. The method of claim 6, wherein:
the step of sintering the mixture, comprises raising and lowering the temperature at a rate of less than 5°C per minute.

11. The method of claim 6, wherein:

the secondary particle has a plurality of internal pores, and
the plurality of internal pores accounts for 5 to 15 volume% of the total volume of the secondary particle.

12. A positive electrode comprising the positive active material for an all-solid battery of any one of claim 1 to claim 5.

13. The positive electrode of claim 12, further comprises:
a sulfide solid electrolyte.

14. An all-solid battery, comprising the positive electrode of claim 12.

15. The all-solid battery of claim 14, futher comprises:
a negative electrode and a sulfide solid electrolyte.

【FIG. 1】

【FIG. 2】

【FIG. 3】

【FIG. 4】

【FIG. 5】

【FIG. 6】

【FIG. 7】

【FIG. 8】

【FIG. 9】

【FIG. 10】

## INTERNATIONAL SEARCH REPORT

| International application No. |
|---|
| **PCT/KR2022/020495** |

**A. CLASSIFICATION OF SUBJECT MATTER**

**H01M 4/525**(2010.01)i; **H01M 4/505**(2010.01)i; **H01M 4/36**(2006.01)i; **H01M 4/62**(2006.01)i; **H01M 4/131**(2010.01)i; **H01M 10/0562**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); H01M 10/0525(2010.01); H01M 10/0562(2010.01); H01M 4/131(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all-solid battery), 층상(layered), 양극(cathode), 응집(cohesion), 기공 (pore)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0026571 A (SAMSUNG ELECTRONICS CO., LTD. et al.) 13 March 2019 (2019-03-13) See claims 1, 7 and 20; and paragraphs [0085], [0096], [0101], [0103], [0107]-[0109], [0126], [0140], [0151]-[0152] and [0159]-[0162]. | 1-4,6-12,14 |
| Y | | 5,13,15 |
| Y | KR 10-2014-0127216 A (NATIONAL INSTITUTE OF ADVANCED INDUSTRIAL SCIENCE AND TECHNOLOGY et al.) 03 November 2014 (2014-11-03) See paragraphs [0032]-[0035] and [0173]. | 5 |
| Y | KR 10-2018-0072944 A (KOREA ELECTROTECHNOLOGY RESEARCH INSTITUTE) 02 July 2018 (2018-07-02) See claim 8; and paragraph [0016]. | 13,15 |
| A | KR 10-2014-0126302 A (SUMITOMO METAL MINING CO., LTD.) 30 October 2014 (2014-10-30) See entire document. | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 March 2023** | **17 March 2023** |

| Name and mailing address of the ISA/KR | Authorized officer |
|---|---|
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/020495** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 10-2017-0103699 A (LG CHEM, LTD.) 13 September 2017 (2017-09-13)<br>See entire document. | 1-15 |

Form PCT/ISA/210 (second sheet) (July 2022)

**INTERNATIONAL SEARCH REPORT**
Information on patent family members

| International application No. |
| --- |
| **PCT/KR2022/020495** |

| Patent document cited in search report | | | Publication date (day/month/year) | Patent family member(s) | | | Publication date (day/month/year) |
| --- | --- | --- | --- | --- | --- | --- | --- |
| KR | 10-2019-0026571 | A | 13 March 2019 | None | | | |
| KR | 10-2014-0127216 | A | 03 November 2014 | CN | 103424493 | A | 04 December 2013 |
| | | | | CN | 103424493 | B | 08 April 2015 |
| | | | | CN | 104054200 | A | 17 September 2014 |
| | | | | CN | 104054200 | B | 22 February 2017 |
| | | | | JP | 2015-115219 | A1 | 11 May 2015 |
| | | | | JP | 6083609 | B2 | 22 February 2017 |
| | | | | KR | 10-1990168 | B1 | 17 June 2019 |
| | | | | TW | 201336159 | A | 01 September 2013 |
| | | | | TW | I556500 | B | 01 November 2016 |
| | | | | US | 2015-0017534 | A1 | 15 January 2015 |
| | | | | WO | 2013-115219 | A1 | 08 August 2013 |
| KR | 10-2018-0072944 | A | 02 July 2018 | None | | | |
| KR | 10-2014-0126302 | A | 30 October 2014 | CN | 104136376 | A | 05 November 2014 |
| | | | | CN | 104136376 | B | 29 June 2016 |
| | | | | EP | 2796415 | A1 | 29 October 2014 |
| | | | | EP | 2796415 | B1 | 23 August 2017 |
| | | | | JP | 2013-147416 | A | 01 August 2013 |
| | | | | JP | 5971109 | B2 | 17 August 2016 |
| | | | | KR | 10-1644252 | B1 | 29 July 2016 |
| | | | | US | 2014-0377660 | A1 | 25 December 2014 |
| | | | | US | 9406930 | B2 | 02 August 2016 |
| | | | | WO | 2013-094701 | A1 | 27 June 2013 |
| KR | 10-2017-0103699 | A | 13 September 2017 | CN | 108028369 | A | 11 May 2018 |
| | | | | CN | 108028369 | B | 17 November 2020 |
| | | | | EP | 3425703 | A1 | 09 January 2019 |
| | | | | EP | 3425703 | B1 | 11 September 2019 |
| | | | | JP | 2018-531500 | A | 25 October 2018 |
| | | | | JP | 6723545 | B2 | 15 July 2020 |
| | | | | KR | 10-1949249 | B1 | 19 February 2019 |
| | | | | US | 10535873 | B2 | 14 January 2020 |
| | | | | US | 2018-0212237 | A1 | 26 July 2018 |

Form PCT/ISA/210 (patent family annex) (July 2022)